# EUROPEAN PATENT APPLICATION

(11) **EP 3 633 121 A1**
(43) Date of publication of application: **08.04.2020**
(21) Application number: 19209065.2
(22) Date of filing: 19.10.2018
(51) Int. Cl.: E04H 6/18, B62H 3/10

(54) **START ASSIST DEVICE**

(30) Priority: 20.10.2017 JP 2017203518
(62) Divisional of application: 18201439.9
(71) Applicant: YAMAHA HATSUDOKI KABUSHIKI KAISHA, Iwata-shi, Shizuoka 438-8501 (JP)
(72) Inventor: MORITA, Hiroyuki, Shizuoka, 438-8501 (JP); KASAI, Satoshi, Shizuoka, 438-8501 (JP); MURAMATSU, Hirokatsu, Shizuoka, 438-8501 (JP); KATAKURA, Tatsuro, Shizuoka, 438-8501 (JP); HARA, Nobuo, Shizuoka, 438-8501 (JP)
(74) Representative: Grünecker Patent- und Rechtsanwälte PartG mbB

(57) **Abstract**

Provided is a start assist device with a first rail (130L) configured to carry a first spool (161 L) of a straddled vehicle (40), a second rail (130R) configured to carry a second spool (161R) of the straddled vehicle (40), a first jack (120L) configured to support the first rail (130L), and a second jack (120R) configured to support the second rail (130R). The first jack (120L) is configured to enable adjustment of a height of the first rail (130L), and the second jack (120R) is configured to enable adjustment of a height of the second rail (130R).

## Description

The present invention relates to a start assist device configured to assist start of the straddled vehicle.

In recent years, there has been proposed a self-driving technology of allowing a vehicle to drive itself without necessity of drive by an occupant. Moreover, there has been proposed a technology of installing a robot configured to imitate a motion of the human on an existing vehicle and allowing the robot to drive the vehicle.

In International Patent WO2017/070426, there is disclosed such a technology of installing a robot configured to imitate a motion of the human on a two-wheeled vehicle having an internal combustion engine as a drive source, and allowing the robot to drive the two-wheeled vehicle. The robot installed on the two-wheeled vehicle carries out drive operations such as a steering operation, an accelerator operation, a brake operation, and a gear shift operation so that the two-wheeled vehicle can travel.

When a vehicle such as a two-wheeled vehicle that does not stand by itself in a stopping state is to be parked, the vehicle is allowed to stand by itself through use of, for example, a side stand, a center stand, or an outrigger.

Meanwhile, it is desired that a vehicle be parked without falling down even when the vehicle does not have a mechanism configured to allow the vehicle to stand by itself such as the stand or the outrigger. For example, it is desired that the self-driving two-wheeled vehicle as described above be parked without use of the mechanism configured to allow the vehicle to stand by itself such as the stand or the outrigger.

It is the object of the present invention to provide a start assist device configured to assist start of a straddled vehicle. According to the present invention said object is solved by start assist device having the features of independent clam 1. Preferred embodiments are laid down in the dependent claims.

According to one embodiment, there is provided a parking device configured to park a straddled vehicle, including: an arm configured to support the vehicle; an actuator configured to move a position of the arm; and a control device configured to control an operation of the actuator. The control device is configured to control the actuator to bring the arm close to the vehicle in accordance with entry of the vehicle into the parking device.

In at least one embodiment, the parking device may further include a speed sensor, which is to be used for detection of a travel speed of the vehicle entering the parking device. The control device may be configured to change a timing of starting a movement of the arm in accordance with the detected travel speed of the vehicle.

In at least one embodiment, when the detected speed of the vehicle is low, the control device may delay the timing of starting the movement of the arm compared with a case in which the detected speed is high.

In at least one embodiment, the parking device may further include a speed sensor, which is to be used for detection of a travel speed of the vehicle entering the parking device. The control device may be configured to change a movement speed of the arm in accordance with the detected travel speed of the vehicle.

In at least one embodiment, when the detected speed of the vehicle is low, the control device may reduce the movement speed of the arm compared with the case in which the detected speed is high.

In at least one embodiment, the parking device may further include a contact sensor, which is to be used for detection of whether or not the arm is in contact with the vehicle. When the contact of the arm with the vehicle is detected, the control device may stop the movement of the arm.

In at least one embodiment, the parking device may further include a distance sensor, which is to be used for detection of a distance between the arm and the vehicle. When the distance between the arm and the vehicle falls below a predetermined value, the control device may reduce the movement speed of the arm.

In at least one embodiment, in the parking device, the arm may include a first arm and a second arm, the actuator may include a first actuator configured to move the first arm, and a second actuator configured to move the second arm, and the control device may be configured to: control the first actuator to bring the first arm close to the vehicle from a left side of the vehicle; and control the second actuator to bring the second arm close to the vehicle from a right side of the vehicle.

In at least one embodiment, the parking device may further include a position sensor, which is to be used for detection of an entry position of the vehicle into the parking device. The control device may be configured to set at least one of a movement speed and a timing of starting a movement for each of the first arm and the second arm in accordance with the detected entry position of the vehicle.

In at least one embodiment, when the detected entry position of the vehicle is closer to a left side of the parking device than a right side of the parking device, the control device may carry out one of setting of the movement speed of the first arm to a speed lower than the movement speed of the second arm and delaying of the timing of starting the movement of the first arm compared with the timing of starting the movement of the second arm.

In at least one embodiment, the control device may be configured to: calculate a distance between the first arm and the second arm based on operation amounts of the first actuator and the second actuator; and stop the movements of the first arm and the second arm when the distance between the first arm and the second arm falls below a predetermined value.

According to one embodiment, there is provided a start assist device, including: a first rail configured to carry a first spool of a straddled vehicle; a second rail configured to carry a second spool of the straddled vehicle; a first jack configured to support the first rail; and a second jack configured to support the second rail. The first jack enables adjustment of a height of the first rail, and the second jack enables adjustment of a height of the second rail.

In at least one embodiment, a lengthwise direction of the first rail and a lengthwise direction of the second rail may be parallel to one another, and the straddled vehicle may be movable along the lengthwise directions of the first rail and the second rail.

In at least one embodiment, the first rail may have a recess to which the first spool is fitted, and the second rail may have a recess to which the second spool is fitted. In at least one embodiment, at least a part of the first rail may have a tapered shape, and at least a part of the second rail may have a tapered shape.

The parking device according to one embodiment is configured to bring the arm, which is configured to support the straddled vehicle, close to the vehicle in accordance with the entry of the vehicle into the parking device. The straddled vehicle is supported by the arm, and can maintain the stop state in the upright posture without falling down. As a result, the vehicle can be parked without use of a mechanism configured to allow the vehicle to stand by itself such as the side stand, the center stand, or the outrigger.

Other features, elements, processes, steps, characteristics and advantages of the present teaching will become more apparent from the following detailed description of preferred embodiments with reference to the attached drawings.

### BRIEF DESCRIPTION OF THE DRAWINGS

FIG. 1 is a top view for illustrating a parking device according to one embodiment.
FIG. 2 is a rear view for illustrating the parking device according to the one embodiment.
FIG. 3 is a view for illustrating movements of arms in the one embodiment.
FIG. 4 is a view for illustrating movements of the arms in the one embodiment.
FIG. 5 is a view for illustrating movements of the arms in the one embodiment.
FIG. 6 is a view for illustrating the arms in the one embodiment.
FIG. 7 is a diagram for illustrating a control device of the parking device according to the one embodiment.
FIG. 8 is a flowchart for illustrating processing of controlling operations of actuators in the one embodiment.
FIG. 9 is a flowchart for illustrating processing of controlling the actuators in the one embodiment.
Portions (a) to (I) of FIG. 10 are timing charts for illustrating the control of the actuators in the one embodiment.
FIG. 11 is a view for illustrating movements of the arms in accordance with entry of the vehicle into the parking device according to the one embodiment.
FIG. 12 is a view for illustrating movements of the arms in accordance with the entry of the vehicle into the parking device according to the one embodiment.
FIG. 13 is a view for illustrating movements of the arms in accordance with the entry of the vehicle into the parking device according to the one embodiment.
FIG. 14 is a view for illustrating movements of the arms in accordance with the entry of the vehicle into the parking device according to the one embodiment.
FIG. 15 is a view for illustrating movements of the arms in accordance with the entry of the vehicle into the parking device according to the one embodiment.
Portions (a) to (I) of FIG. 16 are timing charts for illustrating another example of the control of the actuators in the one embodiment.
FIG. 17 is a perspective view for illustrating the parking device including robot arms in the one embodiment.
FIG. 18 is a perspective view for illustrating the parking device including the robot arms in the one embodiment.
FIG. 19 is a top view for illustrating the parking device including the robot arms in the one embodiment.
FIG. 20 is a rear view for illustrating the parking device including the robot arms in the one embodiment.
FIG. 21 is a perspective view for illustrating a start assist device according to an embodiment.
FIG. 22 is a side view for illustrating a rear portion of a straddled vehicle in the one embodiment.
FIG. 23 is a view for illustrating spools provided on the straddled vehicle in the one embodiment.
FIG. 24 is a view for illustrating the straddled vehicle parked through use of the start assist device according to the one embodiment.
FIG. 25 is a view for illustrating a jig used for operation of jacks of the start assist device according to the one embodiment.
FIG. 26 is a view for illustrating the straddled vehicle starting and moving forward from the start assist device according to the one embodiment.

### DETAILED DESCRIPTION OF PREFERRED EMBODIMENTS

Now, description is given of embodiments with reference to the drawings. The same components are denoted by the same reference symbols, and redundant description thereof is omitted.

### (First Embodiment)

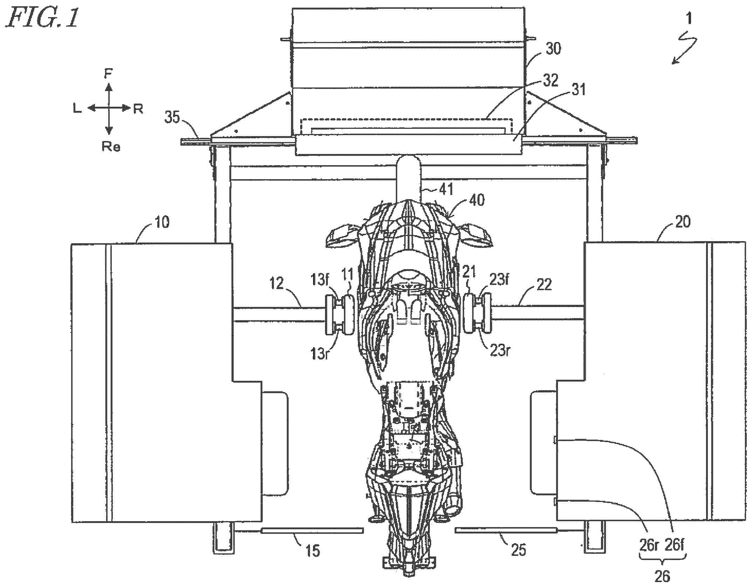

FIG. 1 is a top view for illustrating a parking device 1 according to an embodiment. The parking device 1 is a device configured to park a straddled vehicle 40.

In an example illustrated in FIG. 1, the straddled vehicle 40 is a two-wheeled motor vehicle of an on-road type. However, the straddled vehicle 40 in the one embodiment is not limited to the two-wheeled motor vehicle of the on-road type exemplified herein. The straddled vehicle in the one embodiment may be a two-wheeled motor vehicle of other types such as a scooter type, an off-road type, and a moped type. A drive source for driving the straddled vehicle may be an internal combustion engine, an electric motor, or a hybrid system constructed through combination of an internal combustion engine and an electric motor. Moreover, the straddled vehicle in the one embodiment corresponds to a suitably-selected vehicle on which an occupant rides in a straddling manner, and is not limited to a two-wheeled vehicle. The straddled vehicle 40 may be, for example, a three-wheeled vehicle whose travel direction is changed by leaning a vehicle body. Moreover, the straddled vehicle 40 may be a bicycle. The straddled vehicle 40 is, for example, a vehicle that does not stand by itself when the vehicle stops.

In the following description, unless otherwise specified, front, rear, left, right, up, and down correspond to front, rear, left, right, up, and down, respectively, as viewed from an occupant seating on a seat of the two-wheeled motor vehicle 40 being parked in the parking device 1. Up and down correspond to up and down in a vertical direction when the two-wheeled motor vehicle 40 stands upright on a horizontal plane. Reference symbols F, Re, L, R, U, and D in the drawings represent front, rear, left, right, up, and down, respectively.

The parking device 1 illustrated in FIG. 1 includes a left base 10, a right base 20, and a front base 30. The left base 10 arranged on a left side of the parking device 1. The right base 20 is arranged on a right side of the parking device 1. The front base 30 is arranged on a front side of the parking device 1.

An (first) arm 12 which is movable in a right-and-left direction with respect to the left base 10 is provided in the left base 10. An (second) arm 22 which is movable in the right-and-left direction with respect to the right base 20 is provided in the right base 20. The arms 12 and 22 are configured to support the two-wheeled motor vehicle 40 during parking.

The front base 30 includes a wall 31 arranged so as to be opposed to the two-wheeled motor vehicle 40 positioned in the parking device 1. The front base 30 includes a damper 32 configured to support the wall 31. The damper 32 is extendable and retractable in a front-and-rear direction. With this configuration, the wall 31 is movable in the front-and-rear direction. With the damper 32 provided to the parking device 1, even when a front wheel 41 of the two-wheeled motor vehicle 40 having entered the parking device 1 comes in contact with the wall 31, impact of the contact can be reduced. The front base 30 is movable in a right-and-left direction along a rail 35. When the two-wheeled motor vehicle 40 starts, the two-wheeled motor vehicle 40 can move forward after the front base 30 is moved rightward or leftward.

The arm 12 includes a contact member 11 and dampers 13f and 13r at a right end portion. The arm 22 includes a contact member 21 and dampers 23f and 23r at a left end portion. When the two-wheeled motor vehicle 40 is being parked, the contact member 11 of the arm 12 or the contact member 21 of the arm 22 is in contact with the two-wheeled motor vehicle 40. The contact members 11 and 21 are made of an elastic material such as rubber. The contact members 11 and 21 have elasticity, and thus can serve as cushions configured to alleviate impact when the arms 12 and 22 come in contact with the two-wheeled motor vehicle 40. Moreover, end portions of the contact members 11 and 21 each have a round shape. With this configuration, the contact members 11 and 21 can be prevented from being caught on the body of the two-wheeled motor vehicle 40.

The dampers 13f and 13r of the arm 12 are extendable and retractable independently of one another. Moreover, the dampers 23f and 23r of the arm 22 are extendable and retractable independently of one another. With this configuration, even when the two-wheeled motor vehicle 40 enters and stops obliquely with respect to the front-and-rear direction, the contact members 11 and 21 can support the two-wheeled motor vehicle 40 under a state in which the contact members 11 and 21 are oriented in directions following a body shape of the two-wheeled motor vehicle 40.

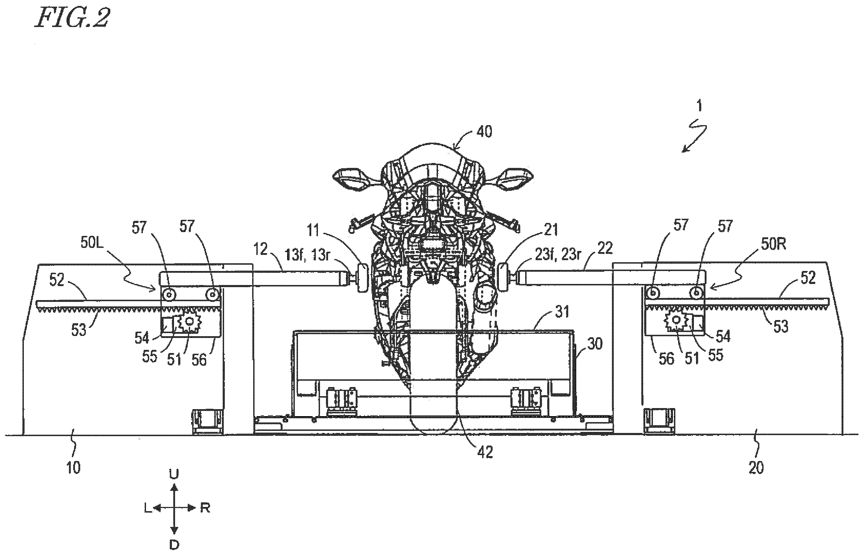

FIG. 2 is a rear view for illustrating the parking device 1 as viewed from a rear side. For ease of understanding, insides of the left base 10 and the right base 20 are transparently illustrated. Moreover, the two-wheeled motor vehicle 40 is transparently illustrated.

The left base 10 includes an (first) actuator 50L configured to move the arm 12. The right base 20 includes an (second) actuator 50R configured to move the arm 22. The actuators 50L and 50R are, for example, linear actuators configured to move the arms 12 and 22, respectively, in the right-and-left direction. A mechanism of each of the actuators 50L and 50R is suitably selected. The actuators 50L and 50R illustrated in FIG. 2 each include a rack and pinion mechanism as an example of the mechanism.

In the example illustrated in FIG. 2, the actuator 50L includes a pinion gear 51, a rail 52, an electric motor 54, a speed reducer 55, a housing 56, and wheels 57. The pinion gear 51, the electric motor 54, the speed reducer 55, and the wheels 57 are provided in the housing 56. The rail 52 including a rack gear 53 is fixed to the left base 10. The wheels 57 can roll along the rail 52. The arm 12 is mounted to the housing 56.

Rotation of the electric motor 54 is reduced in speed by the speed reducer 55, and is then transmitted to the pinion gear 51. The housing 56 moves in the right-and-left direction through rotation of the pinion gear 51 meshing with the rack gear 53. With this configuration, the arm 12 can be moved in the right-and-left direction.

Similarly to the actuator 50L, the actuator 50R includes a pinion gear 51, a rail 52, an electric motor 54, a speed reducer 55, a housing 56, and wheels 57. The rail 52 including a rack gear 53 is fixed to the right base 20. The arm 22 is mounted to the housing 56. The housing 56 moves in the right-and-left direction through rotation of the pinion gear 51 meshing with the rack gear 53. With this configuration, the arm 22 can be moved in the right-and-left direction.

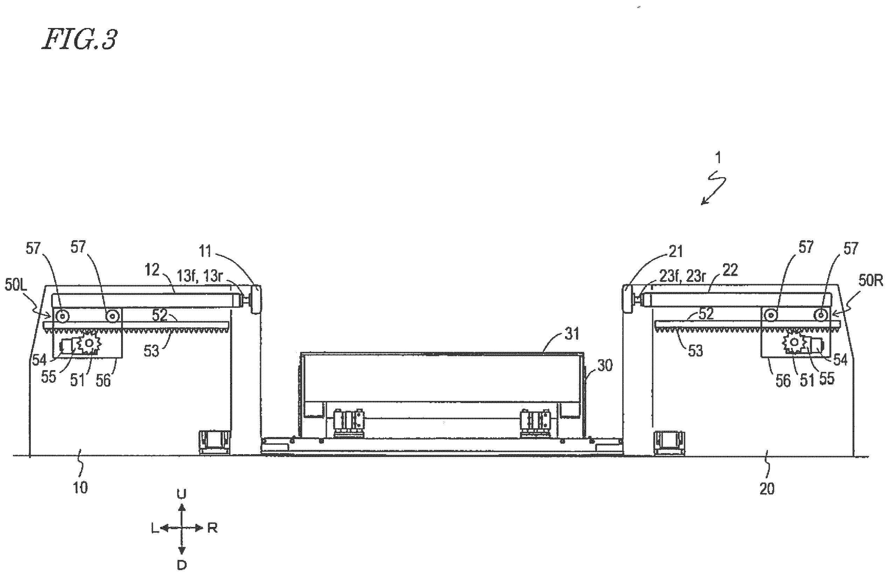

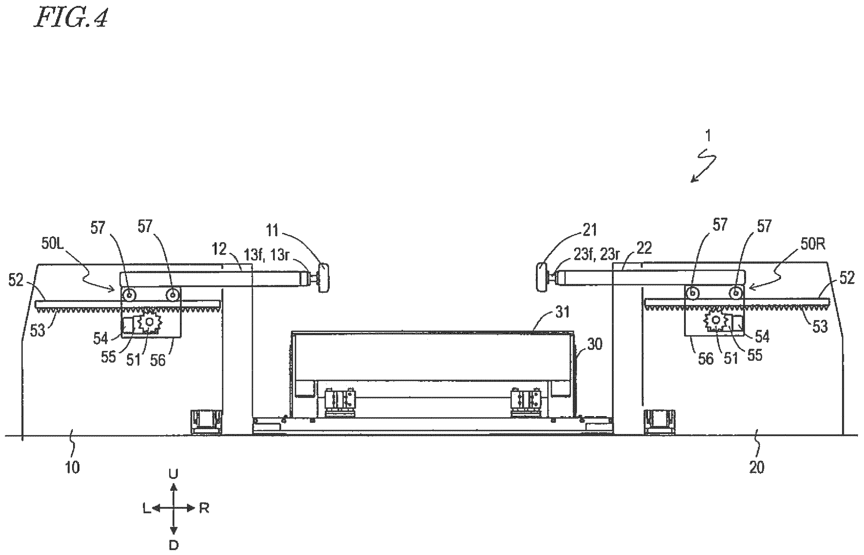

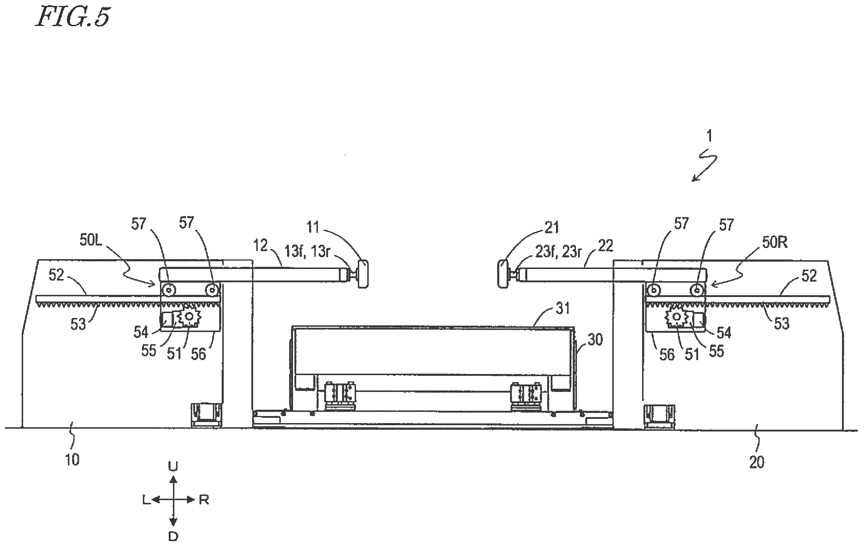

FIG. 3, FIG. 4, and FIG. 5 are views for illustrating movements of the arms 12 and 22. When the two-wheeled motor vehicle 40 is not positioned in the parking device 1, as illustrated in FIG. 3, the arm 12 is positioned on the left side apart from a center of the parking device 1 in the right-and-left direction. The arm 22 is positioned on the right side apart from the center of the parking device 1 in the right-and-left direction. When the two-wheeled motor vehicle 40 enters the parking device 1, as illustrated in FIG. 4 and FIG. 5, the actuators 50L and 50R operate to move the arm 12 rightward and the arm 22 leftward. The arms 12 and 22 having approached the two-wheeled motor vehicle 40 in the parking device 1 stop before coming in contact with the two-wheeled motor vehicle 40. For example, the arms 12 and 22 stop under a state in which a distance between each of the contact members 11 and 21 and the two-wheeled motor vehicle 40 is several centimeters (such as three centimeters). The two-wheeled motor vehicle 40 having stopped in the parking device 1 tilts rightward or leftward, and thus comes in contact with and is supported by any one of the contact members 11 and 21.

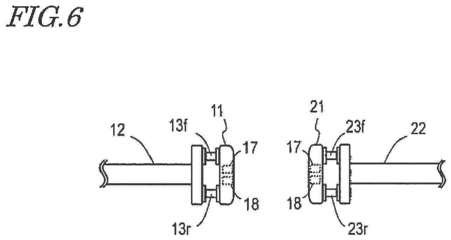

FIG. 6 is a view for illustrating the arms 12 and 22. Each of the arms 12 and 22 includes a distance sensor 17 and a contact sensor 18. The distance sensor 17 of the arm 12 is used for detection of a distance between the arm 12 and the two-wheeled motor vehicle 40. The contact sensor 18 of the arm 12 is used for detection of whether or not the arm 12 is in contact with the two-wheeled motor vehicle 40. The distance sensor 17 of the arm 22 is used for detection of a distance between the arm 22 and the two-wheeled motor vehicle 40. The contact sensor 18 of the arm 22 is used for detection of whether or not the arm 22 is in contact with the two-wheeled motor vehicle 40. The type of the distance sensor 17 is suitably selected, and a distance sensor using, for example, a light emitting diode or a laser light emitting device may be used. The type of the contact sensor 18 is suitably selected, and, for example, a displacement sensor, a pressure sensor, and a switch device configured to mechanically switch between on/off states through depression may be used. In the example illustrated in FIG. 6, the distance sensor 17 and the contact sensor 18 are provided in each of the contact members 11 and 21.

The arms 12 and 22 include the distance sensors 17, and thus the arms 12 and 22 can be stopped under a state in which a suitable gap is defined between each of the contact members 11 and 21 and the two-wheeled motor vehicle 40. Moreover, the arms 12 and 22 include the contact sensors 18, and thus the contact of the arms 12 and 22 with the two-wheeled motor vehicle 40 can be detected. When any one of the arms 12 and 22 comes in contact with the two-wheeled motor vehicle 40 traveling in the parking device 1, disturbance of a posture of the two-wheeled motor vehicle 40 can be suppressed by immediately stopping the arm having come in contact with the two-wheeled motor vehicle 40.

The actuators 50L and 50R may include lock mechanisms configured to lock the motions of the mechanisms so as to more reliably support the two-wheeled motor vehicle 40. For example, the actuators 50L and 50R may include electromagnetic brakes as the lock mechanisms. Moreover, worm gears may be provided to the speed reducers 55 to prevent movements of the arms 12 and 22 caused by the load from the vehicle.

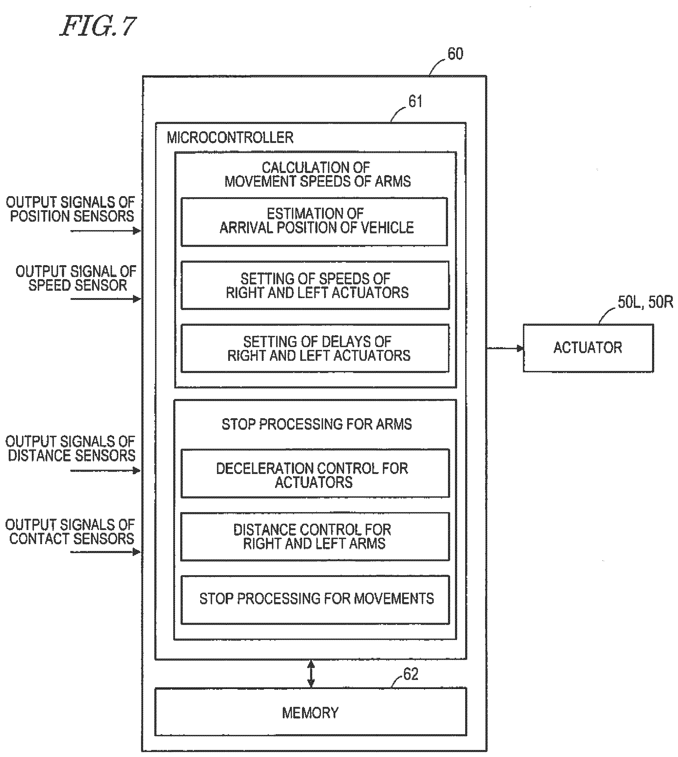

FIG. 7 is a diagram for illustrating a control device 60 of the parking device 1. The control device 60 is provided to, for example, at least one of the left base 10 and the right base 20. The control device 60 is configured to control the operation of the parking device 1. The control device 60 includes a microcontroller 61 and a memory 62. The memory 62 stores a computer program that defines a procedure of controlling operations of respective parts of the parking device 1. The microcontroller 61 reads the computer program from the memory 62 to carry out various types of control. A driver circuit configured to drive the actuators 50L and 50R may be provided in the control device 60, or in each of the actuators 50L and 50R. Moreover, the microcontroller 61 and the memory 62 may be provided in each of the actuators 50L and 50R.

Output signals of various sensors are input to the control device 60. Referring to FIG. 1, the parking device 1 includes a speed sensor 26, which is used for detection of a travel speed of the two-wheeled motor vehicle 40 entering the parking device 1. In the example illustrated in FIG. 1, the speed sensor 26 includes phototube switches 26f and 26r. The type of the speed sensor 26 is suitably selected, and, for example, a sensor of a type of a millimeter wave radar or an ultrasonic sonar may be used. Moreover, a camera may be used as the speed sensor 26, and the speed may be determined based on a change in taken images of the two-wheeled motor vehicle 40.

In the example illustrated in FIG. 1, the phototube switches 26f and 26r are provided on the rear side of the right base 20. The phototube switch 26f is provided in front of the phototube switch 26r. A distance between the phototube switch 26f and the phototube switch 26r in the front-and-rear direction is defined in advance. The two-wheeled motor vehicle 40 enters the parking device 1 from the rear side of the parking device 1. The control device 60 measures a time period from a time point at which the traveling two-wheeled motor vehicle 40 reaches a position of the phototube switch 26r to a time point at which the two-wheeled motor vehicle 40 reaches a position of the phototube switch 26f, to thereby be capable of calculating the travel speed of the two-wheeled motor vehicle 40. Moreover, when three or more phototube switches are arranged along the front-and-rear direction, the acceleration (deceleration) of the two-wheeled motor vehicle 40 can be calculated.

Referring to FIG. 1, the parking device 1 includes position sensors 15 and 25, which are used for detection of an entry position of the two-wheeled motor vehicle 40 entering the parking device 1 in the right-and-left direction. In the example illustrated in FIG. 1, the position sensors 15 and 25 are tape switches. The type of the position sensor is suitably selected, and a position sensor using, for example, a light emitting diode or a laser light emitting device may be used. Moreover, a camera may be used as the position sensor, and the entry position may be determined based on a taken image of the two-wheeled motor vehicle 40.

In the example illustrated in FIG. 1, the tape switches 15 and 25 are provided on the rear side of the parking device 1. The tape switch 15 is positioned on the left side with respect to the center of the parking device 1 in the right-and-left direction. The tape switch 25 is positioned on the right side with respect to the center of the parking device 1 in the right-and-left direction. A gap is defined between the tape switch 15 and the tape switch 25 in the right-and-left direction.

When the two-wheeled motor vehicle 40 enters while being displaced toward the left side with respect to the center of the parking device 1 in the right-and-left direction, the front wheel 41 of the two-wheeled motor vehicle 40 runs over the tape switch 15. When the load is applied to the tape switch 15, the tape switch 15 turns on, and a signal is output to the control device 60. Meanwhile, when the two-wheeled motor vehicle 40 enters while being displaced toward the right side with respect to the center of the parking device 1 in the right-and-left direction, the front wheel 41 of the two-wheeled motor vehicle 40 runs over the tape switch 25. When the load is applied to the tape switch 25, the tape switch 25 turns on, and a signal is output to the control device 60. When the entry position of the two-wheeled motor vehicle 40 is approximately close to the center of the parking device 1 in the right-and-left direction, the front wheel 41 of the two-wheeled motor vehicle 40 does not run over any one of the tape switches 15 and 25, and thus no signal is output from the tape switches 15 and 25. The microcontroller 61 can detect the entry position of the two-wheeled motor vehicle 40 in accordance with presence or absence of the signal from the tape switches 15 and 25.

Function blocks of the microcontroller 61 are illustrated inside the microcontroller 61 of FIG. 7. The microcontroller 61 sets the movement speeds of the arms 12 and 22. The microcontroller 61 estimates a stop position of the two-wheeled motor vehicle 40 in the parking device 1 based on, for example, the entry speed and the entry position of the two-wheeled motor vehicle 40. Timings of starting the operations of the actuators 50L and 50R and the movement speeds of the actuators 50L and 50R are set in accordance with the estimated stop position.

Moreover, the microcontroller 61 carries out control of stopping the arms 12 and 22. When the arms 12 and 22 are brought close to the two-wheeled motor vehicle 40 at a predetermined distance, the microcontroller 61 decelerates the actuators 50L and 50R. The microcontroller 61 calculates a distance between the arm 12 and the arm 22 based on operation amounts of the actuators 50L and 50R. The microcontroller 61 stops the movements of the arm 12 and the arm 22 when the distance between the arm 12 and the arm 22 becomes less than a predetermined value. When the arm 12 or the arm 22 comes in contact with the two-wheeled motor vehicle 40, the microcontroller 61 immediately stops the movement of the arm having come in contact with the two-wheeled motor vehicle 40.

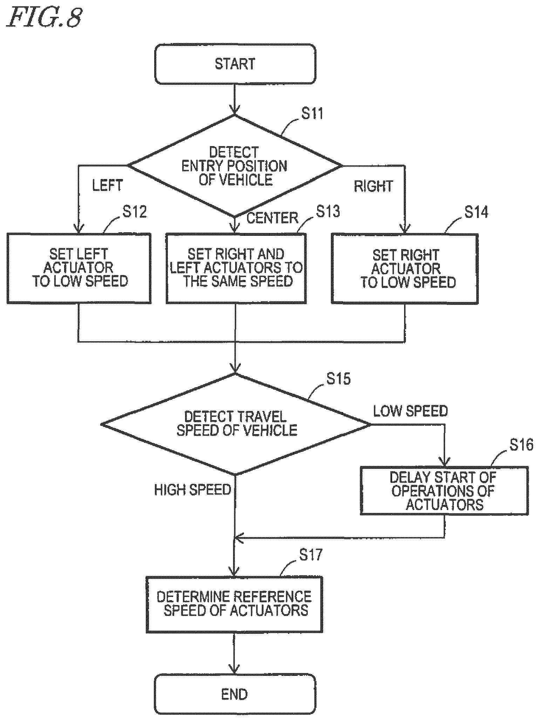

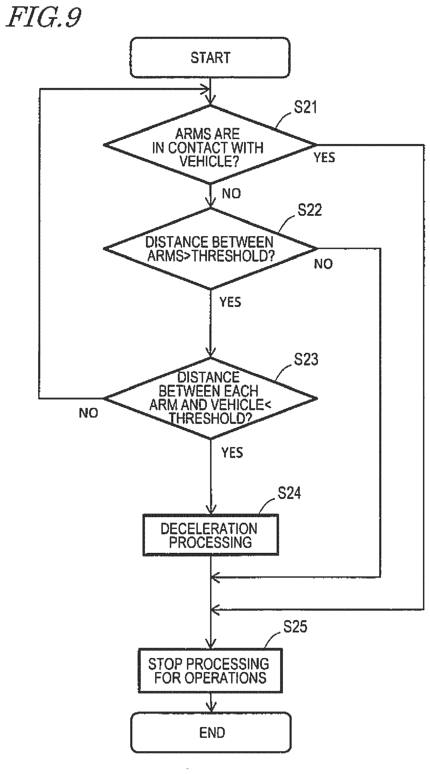

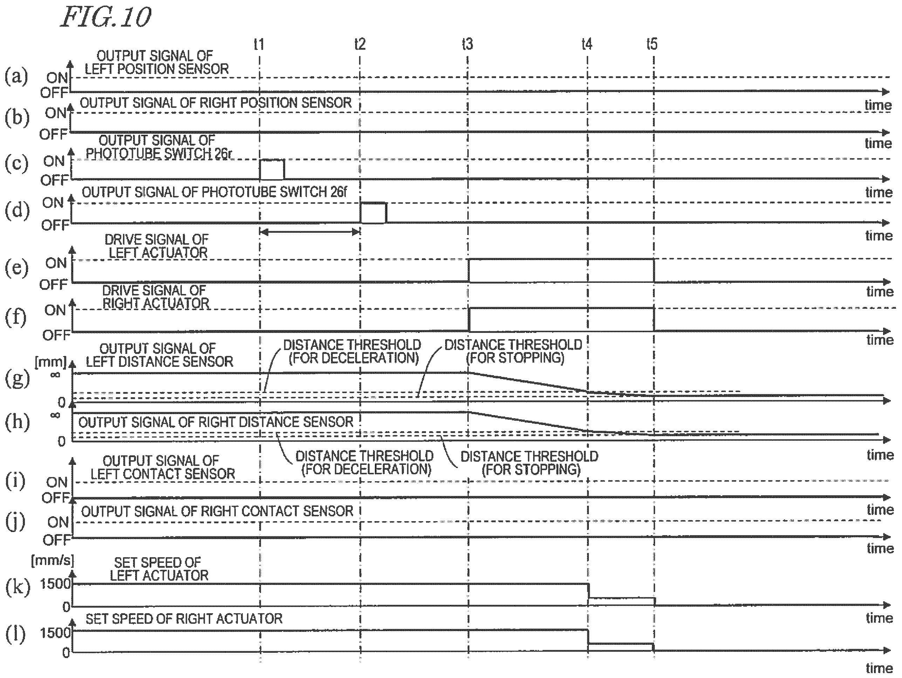

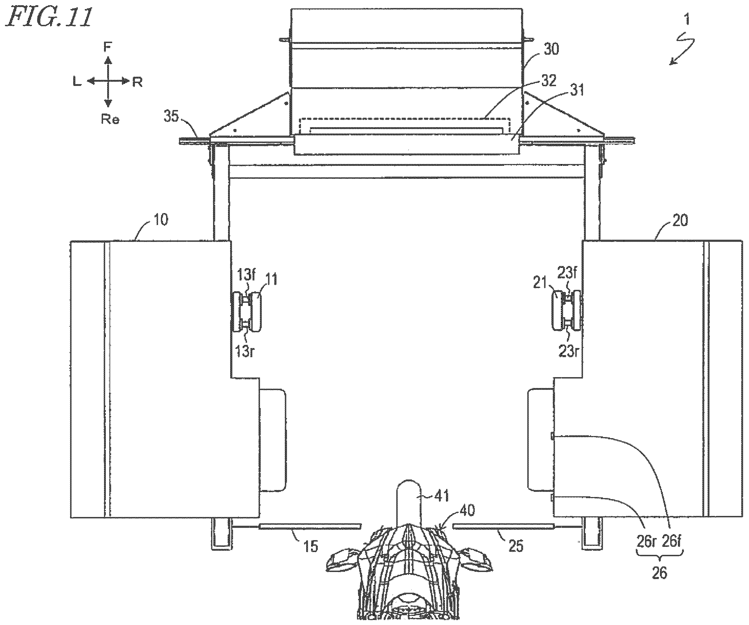

FIG. 8 and FIG. 9 are flowcharts for illustrating processing of controlling the operations of the actuators 50L and 50R. Portions (a) to (I) of FIG. 10 are timing charts for illustrating the control of the actuators 50L and 50R in accordance with output signals of various sensors. FIG. 11 to FIG. 15 are views for illustrating movements the arms 12 and 22 in accordance with the entry of the two-wheeled motor vehicle 40 into the parking device 1.

Respective horizontal axes of Portions (a) to (I) of FIG. 10 represent time. A vertical axis of portion (a) of FIG. 10 represents an output signal of the position sensor (such as the tape switch 15) arranged on the left side. A vertical axis of portion (b) of FIG. 10 represents an output signal of the position sensor (such as the tape switch 25) arranged on the right side. A vertical axis of portion (c) of FIG. 10 represents an output signal of the phototube switch 26r. A vertical axis of portion (d) of FIG. 10 represents an output signal of the phototube switch 26f. A vertical axis of portion (e) of FIG. 10 represents a drive signal of the actuator 50L. A vertical axis of portion (f) of FIG. 10 represents a drive signal of the actuator 50R. A vertical axis of portion (g) of FIG. 10 represents an output signal of the distance sensor 17 provided to the arm 12. A vertical axis of portion (h) of FIG. 10 represents an output signal of the distance sensor 17 provided to the arm 22. A vertical axis of portion (i) of FIG. 10 represents an output signal of the contact sensor 18 provided to the arm 12. A vertical axis of portion (j) of FIG. 10 represents an output signal of the contact sensor 18 provided to the arm 22. A vertical axis of portion (k) of FIG. 10 represents a set speed of the actuator 50L. A vertical axis of portion (I) of FIG. 10 represents a set speed of the actuator 50R.

FIG. 11 is a view for illustrating a state in which the two-wheeled motor vehicle 40 starts entering the parking device 1. In the example of the processing illustrated in FIG. 8, the entry position of the two-wheeled motor vehicle 40 in the right-and-left direction of the parking device 1 is first detected (Step S11). The entry position of the two-wheeled motor vehicle 40 can be detected through use of the tape switches 15 and 25.

When the two-wheeled motor vehicle 40 enters while being displaced toward the left side with respect to the center of the parking device 1 in the right-and-left direction, the microcontroller 61 sets the movement speed of the actuator 50L to a low speed (Step S12). As a result, the contact between the two-wheeled motor vehicle 40, which travels in the parking device 1 while being displaced toward the left side, and the arm 12 can be suppressed.

When the two-wheeled motor vehicle 40 enters while being displaced toward the right side with respect to the center of the parking device 1 in the right-and-left direction, the microcontroller 61 sets the movement speed of the actuator 50R to a low speed (Step S14). As a result, the contact between the two-wheeled motor vehicle 40, which travels in the parking device 1 while being displaced toward the right side, and the arm 22 can be suppressed.

When the entry position of the two-wheeled motor vehicle 40 is approximately close to the center of the parking device 1 in the right-and-left direction, the tape switches 15 and 25 are not brought into the ON state. In this case, the microcontroller 61 sets the movement speeds of the actuator 50L and 50R to a reference speed (Step S13). A magnitude of the reference speed is larger than that when the low speed is set. In the example illustrated in portions (a) and (b) of FIG. 10, the entry position of the two-wheeled motor vehicle 40 is approximately at the center, and the tape switches 15 and 25 are not in the ON state.

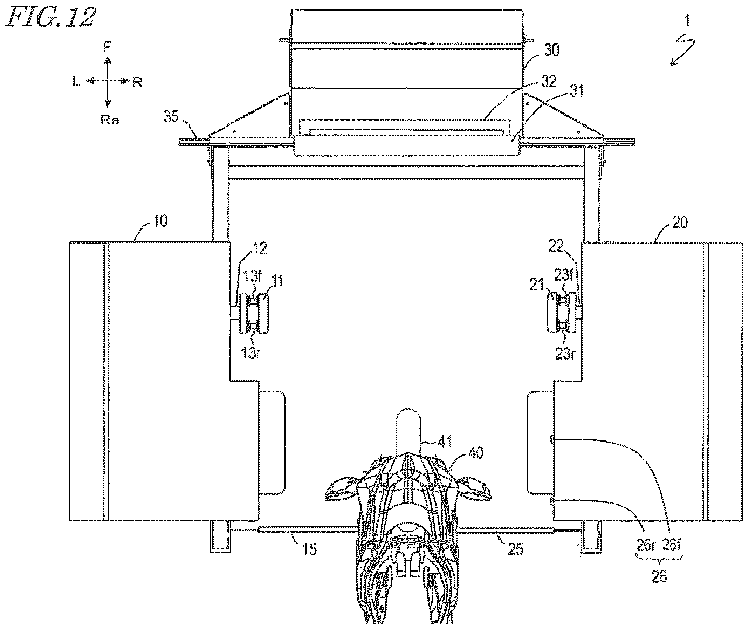

At a time point t1 illustrated in FIG. 10, when the two-wheeled motor vehicle 40 reaches the position of the phototube switch 26r in the front-and-rear direction, the phototube switch 26r turns ON (the output signal becomes Hi). At a time point t2, when the two-wheeled motor vehicle 40 reaches the position of the phototube switch 26f as illustrated in FIG. 12, the phototube switch 26f turns ON (the output signal becomes Hi). The microcontroller 61 calculates the travel speed of the two-wheeled motor vehicle 40 based on the time period from the turning ON of the phototube switch 26r to the turning ON of the phototube switch 26f (Step S15). For example, the two-wheeled motor vehicle 40 enters the parking device 1 at a speed of 15 km/h. On this occasion, the two-wheeled motor vehicle 40 enters under a state in which, for example, the drive by the internal combustion engine is off, and the shift position of a transmission is at a low gear. Data on a deceleration in such a vehicle state is stored in the memory 62 in advance. The microcontroller 61 can estimate a position at which the two-wheeled motor vehicle 40 stops based on the travel speed of the two-wheeled motor vehicle 40 and the data on the deceleration.

When the travel speed of the two-wheeled motor vehicle 40 is equal to or higher than a predetermined speed (when the travel speed is a high speed), the microcontroller 61 starts the movements of the actuators 50L and 50R at a standard timing. The predetermined speed is, for example, 15 km/h, but is not limited thereto. When the travel speed of the two-wheeled motor vehicle 40 is lower than the predetermined speed (when the travel speed is a low speed), the timings of starting the movements of the actuators 50L and 50R are delayed (Step S16). As a result, the contact between the two-wheeled motor vehicle 40, which travels in the parking device 1, and the arms 12 and 22 can be suppressed.

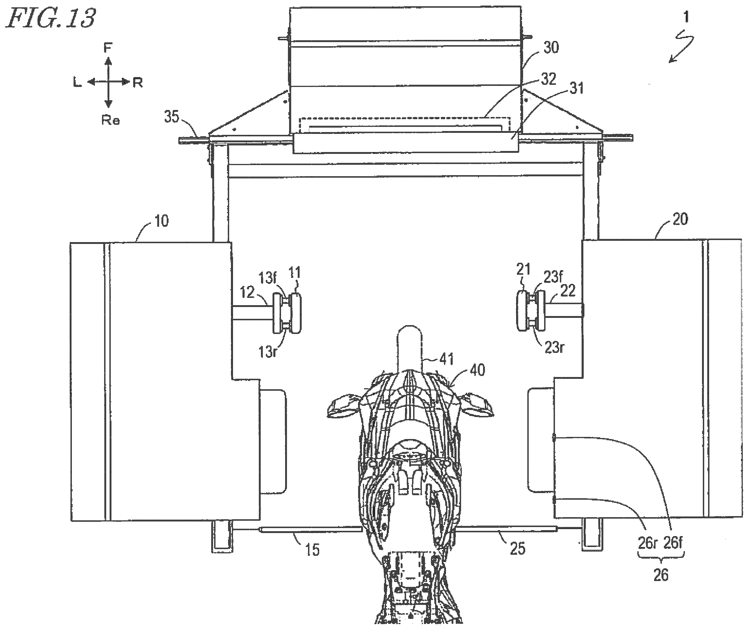

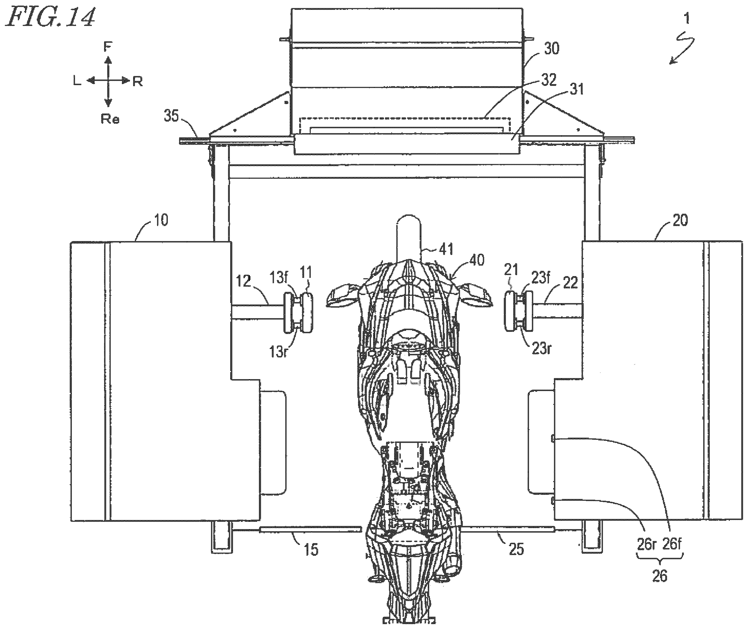

Through the above-mentioned processing, the timings of starting the movements of the actuators 50L and 50R and the movement speeds of the actuators 50L and 50R are determined (Step S17). In the example shown in FIG. 10, the actuators 50L and 50R start moving at a time point t3, and the movement speeds are the standard speed. FIG. 13 and FIG. 14 are views for illustrating a state in which the arm 12 is brought close to the two-wheeled motor vehicle 40 from the left side of the two-wheeled motor vehicle 40 and in which the arm 22 is brought close to the two-wheeled motor vehicle 40 from the right side of the two-wheeled motor vehicle 40.

FIG. 9 is a flowchart for illustrating an example of processing of stopping the actuators 50L and 50R. The processing illustrated in FIG. 9 can be carried out independently for each of the actuators 50L and 50R. In Step S21, the microcontroller 61 uses the output signals of the contact sensors 18 to determine whether or not the arms 12 and 22 are in contact with the two-wheeled motor vehicle 40. When the contact of at least one of the arms 12 and 22 with the two-wheeled motor vehicle 40 is detected, the microcontroller 61 stops the actuator configured to move the arm having come in contact with the two-wheeled motor vehicle 40 (Step S25). When the arm having come in contact with the two-wheeled motor vehicle 40 continues to move, a posture of the two-wheeled motor vehicle 40 may be disturbed. When the contact is detected, the disturbance of the posture of the two-wheeled motor vehicle 40 can be suppressed by stopping the movement of the corresponding arm.

When the contact is not detected, the microcontroller 61 calculates a distance between the arm 12 and the arm 22 based on the operation amounts of the actuators 50L and 50R (Step S22). When the distance between the arm 12 and the arm 22 is less than a predetermined value, the microcontroller 61 stops the actuators 50L and 50R (Step S25). The contact between the two-wheeled motor vehicle 40, which travels in the parking device 1, and the arms 12 and 22 can be suppressed by preventing the gap between the arm 12 and the arm 22 from becoming excessively narrow.

When the distance between the arm 12 and the arm 22 is equal to or more than the predetermined value, the microcontroller 61 uses the output signals of the distance sensors 17 to detect the distance between the arm 12 and the two-wheeled motor vehicle 40 and the distance between the arm 22 and the two-wheeled motor vehicle 40 (Step S23).

When the detected distances are equal to or more than a threshold for the deceleration shown in portions (g) and (h) of FIG. 10, the processing returns to the processing in Step S21. When the detected distance is less than the threshold for the deceleration, deceleration of the actuator configured to move the corresponding arm is started (Step S24, time point t4). Then, when the detected distance falls below a threshold for the stopping shown in portions (g) and (h) of FIG. 10, the actuator is stopped (Step S25, time point t5).

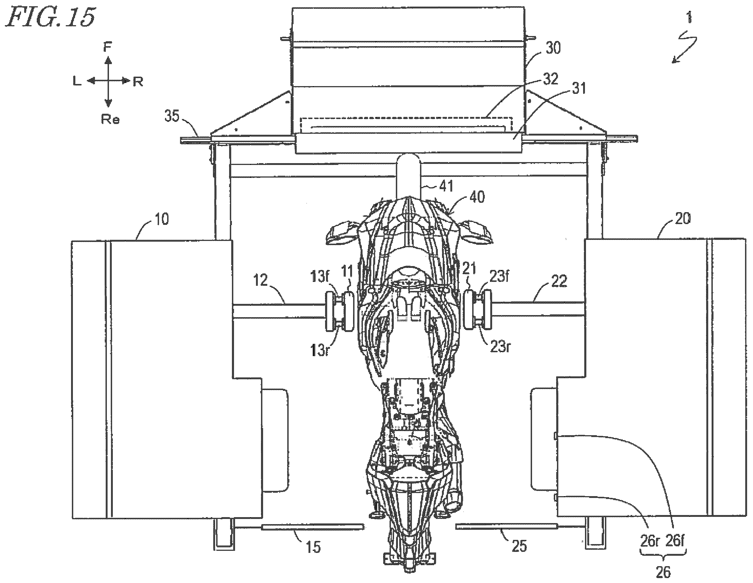

As illustrated in FIG. 15, the microcontroller 61 stops the actuators 50L and 50R before the arms 12 and 22 come in contact with the two-wheeled motor vehicle 40. For example, under a state in which the distances between the respective contact members 11 and 21 and the two-wheeled motor vehicle 40 are several centimeters (such as three centimeters), the actuators 50L and 50R are stopped. The two-wheeled motor vehicle 40 having stopped in the parking device 1 tilts rightward or leftward, and thus comes in contact with and is supported by any one of the contact members 11 and 21. Regardless of whether the two-wheeled motor vehicle 40 tilts rightward or leftward after the stopping, the two-wheeled motor vehicle 40 is supported by the arm 12 or 22, and can maintain the stop state in the upright posture without falling down. As a result, the two-wheeled motor vehicle 40 can be parked without use of a mechanism configured to allow the two-wheeled motor vehicle 40 to stand by itself such as a side stand, a center stand, or an outrigger.

In the example illustrated in FIG. 8, although the movement speed of the actuator 50L or 50R is set to the low speed in accordance with the detected entry position of the two-wheeled motor vehicle 40, the timing of starting the movement of the actuator 50L or 50R may be delayed in accordance with the entry position. Moreover, in the example illustrated in FIG. 8, when the detected speed of the two-wheeled motor vehicle 40 is low, the timings of starting the operations of the actuators 50L and 50R are delayed, but the movement speeds of the actuators 50L and 50R may be reduced. As a result, the contact between the two-wheeled motor vehicle 40, which travels in the parking device 1, and the arms 12 and 22 can be suppressed.

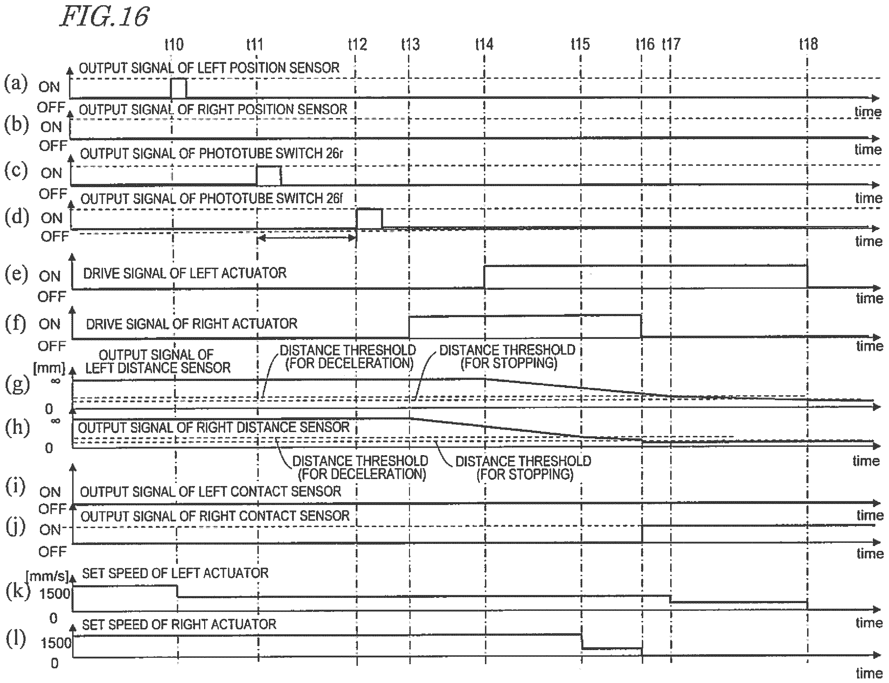

Referring to FIG. 16, description is now given of another example of the operation of the parking device 1. Portions (a) to (I) of FIG. 16 are timing charts for illustrating the operation example of the parking device 1 when the two-wheeled motor vehicle 40 enters the parking device 1 while being displaced toward the left side in the right-and-left direction, and then rolls rightward.

Respective horizontal axes of portions (a) to (I) of FIG. 16 represent time. A vertical axis of portion (a) of FIG. 16 represents an output signal of the position sensor (such as the tape switch 15) arranged on the left side. A vertical axis of portion (b) of FIG. 16 represents an output signal of the position sensor (such as the tape switch 25) arranged on the right side. A vertical axis of portion (c) of FIG. 16 represents an output signal of the phototube switch 26r. A vertical axis of portion (d) of FIG. 16 represents an output signal of the phototube switch 26f. A vertical axis of portion (e) of FIG. 16 represents a drive signal of the actuator 50L. A vertical axis of portion (f) of FIG. 16 represents a drive signal of the actuator 50R. A vertical axis of portion (g) of FIG. 16 represents an output signal of the distance sensor 17 provided to the arm 12. A vertical axis of portion (h) of FIG. 16 represents an output signal of the distance sensor 17 provided to the arm 22. A vertical axis of portion (i) of FIG. 16 represents an output signal of the contact sensor 18 provided to the arm 12. A vertical axis of portion (j) of FIG. 16 represents an output signal of the contact sensor 18 provided to the arm 22. A vertical axis of portion (k) of FIG. 16 represents a set speed of the actuator 50L. A vertical axis of portion (I) of FIG. 16 represents a set speed of the actuator 50R.

When the two-wheeled motor vehicle 40 enters the parking device 1 while being displaced toward the left side, the tape switch 15 turns ON at a time point t10 (the output signal becomes Hi). The microcontroller 61 sets the movement speed of the actuator 50L to the low speed (Step S12 of FIG. 8). Moreover, in this example, the timing of starting the movement of the actuator 50L is delayed.

At time points t11 and t12, the phototube switches 26r and 26f successively turn ON, and the microcontroller 61 calculates the travel speed of the two-wheeled motor vehicle 40. At a time point t13, the actuator 50R starts moving. At a time point t14, the actuator 50L starts moving. When the distance between the arm 22 and the two-wheeled motor vehicle 40 falls below the threshold for the deceleration at a time point t15, the deceleration of the actuator 50R is started.

In this example, the two-wheeled motor vehicle 40 rolls rightward, and comes in contact with the arm 22 at a time point t16. The contact sensor 18 provided to the arm 22 turns ON (the output signal becomes Hi) through the contact. The microcontroller 61 immediately stops the movement of the actuator 50R in response to the output signal of the contact sensor. At a time point t17, the distance between the arm 12 and the two-wheeled motor vehicle 40 falls below the threshold for the deceleration, the deceleration of the actuator 50L is started, and the actuator 50L is stopped at a time point t18.

In such a manner, in the parking device 1 of the first embodiment, even when the entry position and the posture of the two-wheeled motor vehicle 40 are disturbed, the arms 12 and 22 are moved at appropriate timings and speeds in accordance with the state of the two-wheeled motor vehicle 40, and the two-wheeled motor vehicle 40 can be supported at the position at which the two-wheeled motor vehicle 40 stops.

In the above-mentioned example, the parking device 1 includes the two arms 12 and 22, but may include only any one of the two arms 12 and 22. For example, in a mode in which the two-wheeled motor vehicle 40 is set to fall only toward the left side when the two-wheeled motor vehicle 40 stops, the arm 22 may be omitted. Moreover, for example, in a mode in which the two-wheeled motor vehicle 40 is set to fall only toward the right side when the two-wheeled motor vehicle 40 stops, the arm 12 may be omitted.

In the above-mentioned example, as the arms configured to support the two-wheeled motor vehicle 40, the arms 12 and 22 each having a rod shape extending in the right-and-left direction are exemplified. The type of the arms can be suitably selected as long as the arms have a structure capable of supporting the two-wheeled motor vehicle 40. For example, the arms configured to support the two-wheeled motor vehicle 40 may be robot arms.

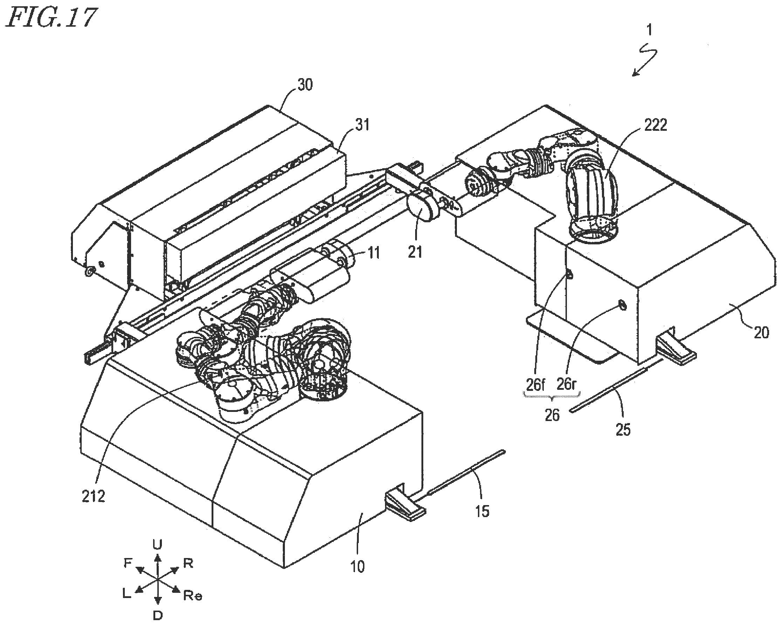

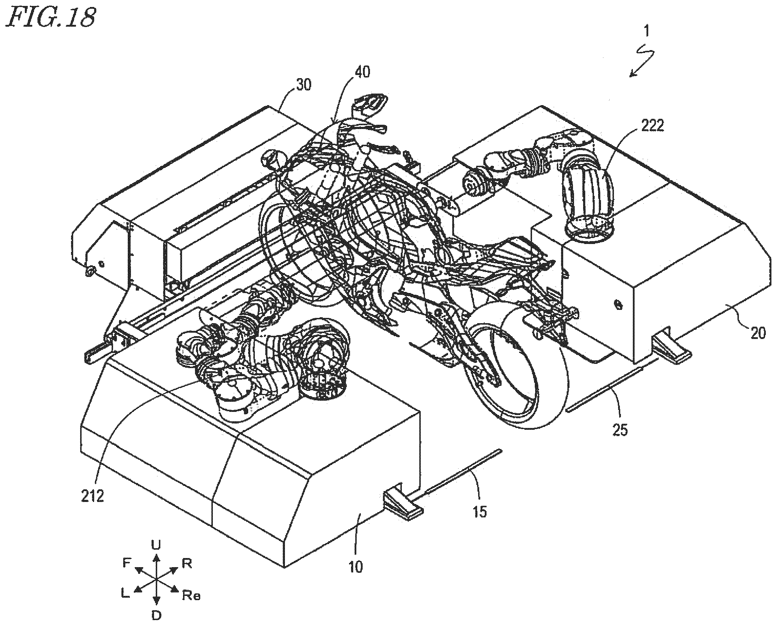

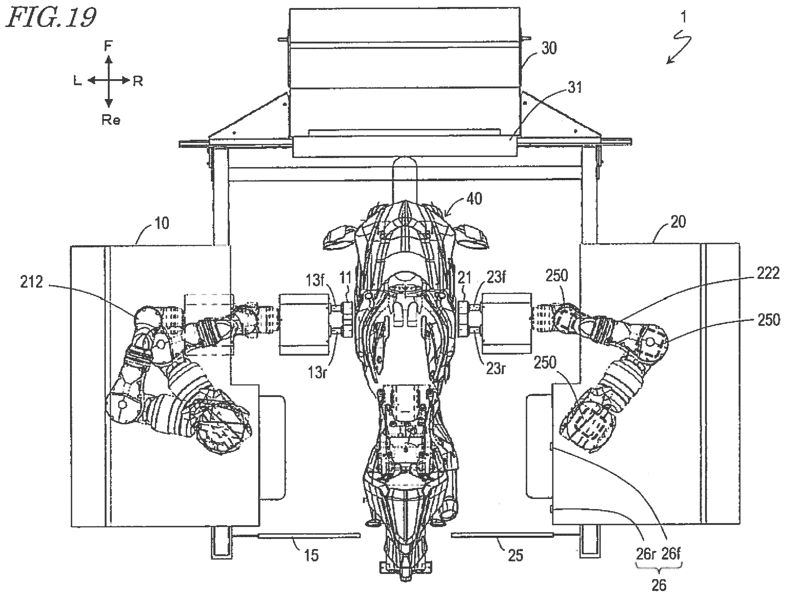

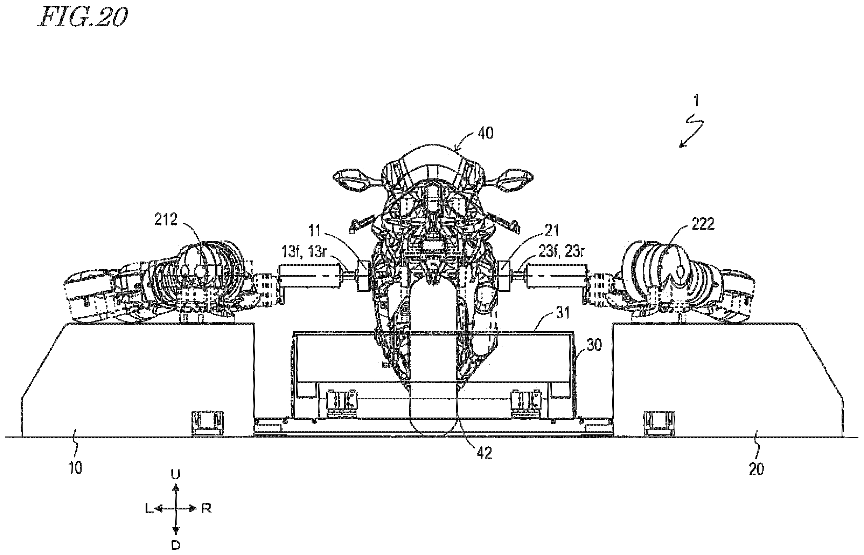

FIG. 17 to FIG. 20 are views for illustrating the parking device 1 including robot arms 212 and 222 in place of the arms 12 and 22. FIG. 17 is a perspective view for illustrating the parking device 1 in which the two-wheeled motor vehicle 40 is not arranged. FIG. 18 is a perspective view for illustrating the parking device 1 in which the two-wheeled motor vehicle 40 is arranged. FIG. 19 is a top view for illustrating the parking device 1. FIG. 20 is a rear view for illustrating the parking device 1.

The robot arm 212 is mounted to the left base 10. The robot arm 222 is mounted to the right base 20. In this example, each of the robot arms 212 and 222 has a plurality of joints. As illustrated in FIG. 19, actuators 250 configured to bend and stretch the joints are provided in the joints of the robot arm 222. Although not illustrated in FIG. 19, similarly to the robot arm 222, actuators 250 configured to bend and stretch the joints are also provided in the joints of the robot arm 212. The type of the actuator 250 is suitably selected, and, for example, the actuator 250 includes an electric motor and a speed reduction mechanism. The actuators which are used for drive of the robot arm are publicly known. Therefore, detailed description thereof is herein omitted.

The contact member 11 and the dampers 13f and 13r are provided in the robot arm 212. The contact member 21 and the dampers 23f and 23r are provided in the robot arm 222. The microcontroller 61 (FIG. 7) controls the actuators 250 to operate the robot arms 212 and 222, thereby being capable of moving the contact members 11 and 21 to suitably-selected positions.

Through operations of the robot arms 212 and 222 similar to the operations described referring to FIG. 7 to FIG. 16, the two-wheeled motor vehicle 40, which has entered and stopped in the parking device 1, can appropriately be supported by the robot arms 212 and 222. When the two-wheeled motor vehicle 40 is not parked in the parking device 1, the robot arm 212 is positioned on the left side, and the contact member 11 is apart from the center of the parking device 1 in the right-and-left direction. Moreover, the robot arm 222 is positioned on the right side, and the contact member 21 is apart from the center of the parking device 1 in the right-and-left direction. When the two-wheeled motor vehicle 40 enters the parking device 1, the microcontroller 61 controls the actuators 250 to operate the robot arms 212 and 222. The contact member 11 moves rightward, and the contact member 21 moves leftward through the operations of the robot arms 212 and 222. Before the contact members 11 and 21 come in contact with the two-wheeled motor vehicle 40, the robot arms 212 and 222 are stopped. The two-wheeled motor vehicle 40 having stopped in the parking device 1 tilts rightward or leftward, and thus comes in contact with and is supported by any one of the contact members 11 and 21. Regardless of whether the two-wheeled motor vehicle 40 tilts rightward or leftward after the stopping, the two-wheeled motor vehicle 40 is supported by the robot arm 212 or 222, and can maintain the stop state in the upright posture without falling down. As a result, the two-wheeled motor vehicle 40 can be parked without use of a mechanism configured to allow the two-wheeled motor vehicle 40 to stand by itself such as a side stand, a center stand, or an outrigger.

Moreover, the robot arms 212 and 222 can provide three-dimensional movements, and thus positions in the up-and-down direction and positions in the front-and-rear direction of the contact members 11 and 21 can be adjusted. As a result, the contact members 11 and 21 can be moved to more appropriate positions with respect to the two-wheeled motor vehicle 40 entering the parking device 1.

In the above-mentioned example, the parking device 1 includes the two robot arms 212 and 222, but may include only any one of the two robot arms 212 and 222. For example, in a mode in which the two-wheeled motor vehicle 40 is set to fall only toward the left side when the two-wheeled motor vehicle 40 stops, the robot arm 222 may be omitted. Moreover, for example, in a mode in which the two-wheeled motor vehicle 40 is set to fall only toward the right side when the two-wheeled motor vehicle 40 stops, the robot arm 212 may be omitted.

### (Second Embodiment)

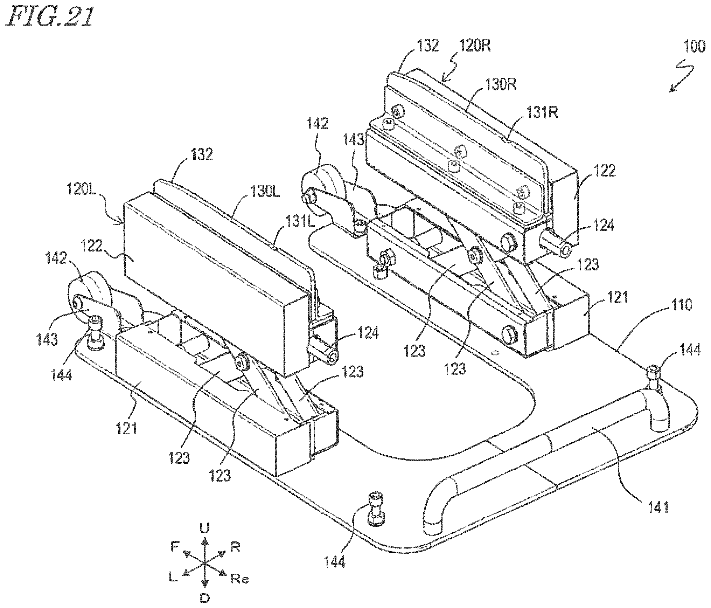

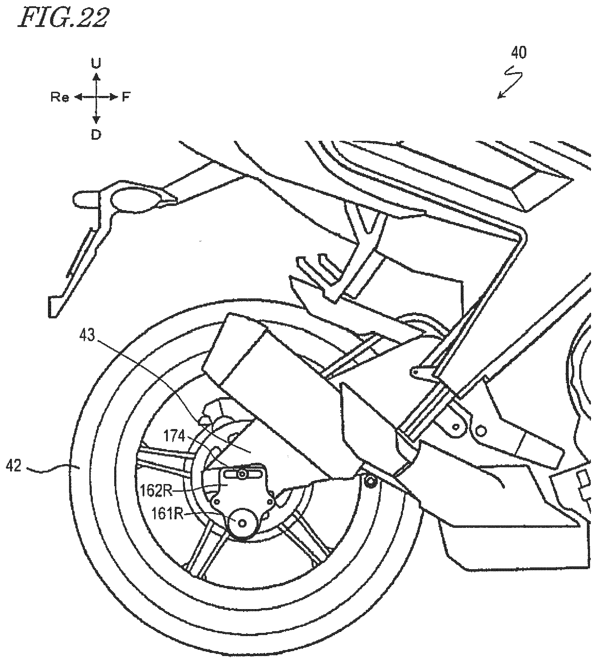

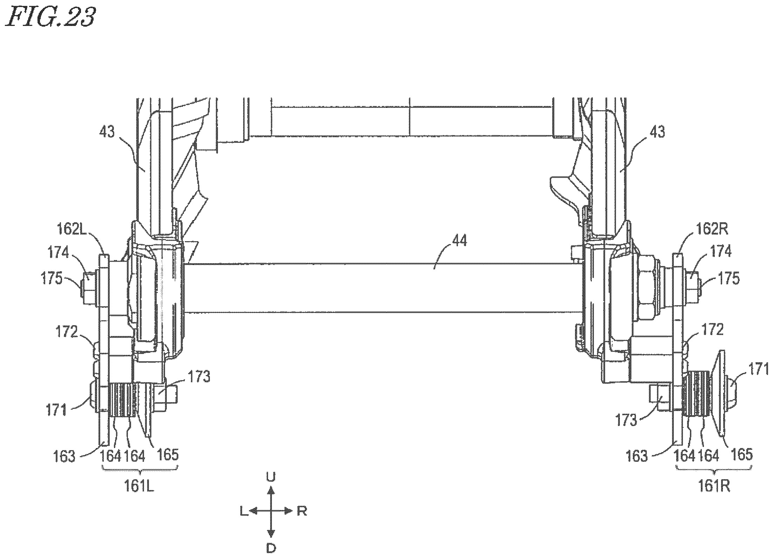

Next, description is given of a start assist device configured to assist start of a straddled vehicle. FIG. 21 is a perspective view for illustrating a start assist device 100 according to a second embodiment. FIG. 22 is a side view for illustrating a rear portion of the two-wheeled motor vehicle 40. FIG. 23 is a view for illustrating spools 161L and 161R provided on the two-wheeled motor vehicle 40.

The start assist device 100 of the second embodiment is configured to support the two-wheeled motor vehicle 40 in the upright posture, to thereby be capable of parking the two-wheeled motor vehicle 40. Moreover, when the two-wheeled motor vehicle 40 starts, the two-wheeled motor vehicle 40 can be started while the two-wheeled motor vehicle 40 is maintained in a state of being supported in the upright posture by the start assist device 100.

The start assist device 100 includes a base 110, a (first) jack 120L, a (second) jack 120R, a (first) rail 130L, and a (second) rail 130R. The jack 120L is provided on the left side of the base 110. The jack 120R is provided on the right side of the base 110.

Each of the jacks 120L and 120R includes a lower stand 121, an upper stand 122, and a plurality of arms 123. The lower stand 121, the upper stand 122, and the plurality of arms 123 form an extension and retraction mechanism. The jacks 120L and 120R can have a pantograph structure. The upper stand 122 can be moved up and down through insertion of a handle (not shown) into a sleeve 124 and rotation of the sleeve 124. A type of the jack is suitably selected, and a mechanical jack, a liquid operation jack, or the like may be used. The structure configured to move up and down the jack is publicly known, and hence detailed description thereof is herein omitted.

The jack 120L is configured to support the rail 130L. The jack 120R is configured to support the rail 130R. In this example, the rail 130L is mounted to the upper stand 122 of the jack 120L. The rail 130R is mounted to the upper stand 122 of the jack 120R. The rails 130L and 130R extend in the front-and-rear direction. A lengthwise direction of the rail 130L and a lengthwise direction of the rail 130R are parallel to one another. A height of the rail 130L can be adjusted by moving up and down the upper stand 122 of the jack 120L. A height of the rail 130R can be adjusted by moving up and down the upper stand 122 of the jack 120R.

Forks 143 are mounted on a left front side and a right front side of the base 110 of the start assist device 100, respectively. The forks 143 each support a wheel 142. A grip 141 is mounted to a rear portion of the base 110. A user can move the start assist device 100 by holding the grip 141 by hand and bringing the wheels 142 in contact with the ground. Level adjusting screws 144 are provided at four corners of the base 110. The user can adjust the angle of the base 110 by operating the level adjusting screws 144.

FIG. 23 is a view for illustrating a part of the rear portion of the two-wheeled motor vehicle 40. Referring to FIG. 22 and FIG. 23, the two-wheeled motor vehicle 40 includes swing arms 43. An axle 44 configured to support a rear wheel 42 is mounted to the swing arms 43. The axle 44 includes thread portions 175 at both end portions. Brackets 162L and 162R are mounted to the thread portions 175 through use of nuts 174. The brackets 162L and 162R are also mounted to the swing arms 43 through use of bolts 172.

The (first) spool 161L is mounted to a lower portion of the bracket 162L through use of a bolt 171 and a nut 173. The (second) spool 161R is mounted to a lower portion of the bracket 162R through use of the bolt 171 and the nut 173. The spool is also referred to as an anchor. In this example, each of the spools 161L and 161R includes at least one ball bearing 164 and a flange 165. The bolt 171 passes through the ball bearing 164 and the flange 165. The ball bearing 164 is rotatable about the bolt 171. The flange 165 may also be rotatable about the bolt 171. In this example, a bottom portion 163 of each of the brackets 162L and 162R can serve as a flange.

When the two-wheeled motor vehicle 40 is to be parked, the rear wheel 42 of the two-wheeled motor vehicle 40 is caused to enter from the front side of the start assist device 100. The rear wheel 42 passes between the jack 120L and the jack 120R, and moves to the rear side of the start assist device 100. On this occasion, the spool 161L rides on the rail 130L, and the spool 161R rides on the rail 130R. The spools 161L and 161R move along the lengthwise directions of the rails 130L and 130R. On this occasion, friction resistance between the spools 161L and 161R and the rails 130L and 130R can be reduced through rotation of the ball bearings 164 of the spools 161L and 161R. The bottom portions 163 and the flanges 165 of the brackets 162L and 162R suppress derailment of the spools 161L and 161R from the rails 130L and 130R.

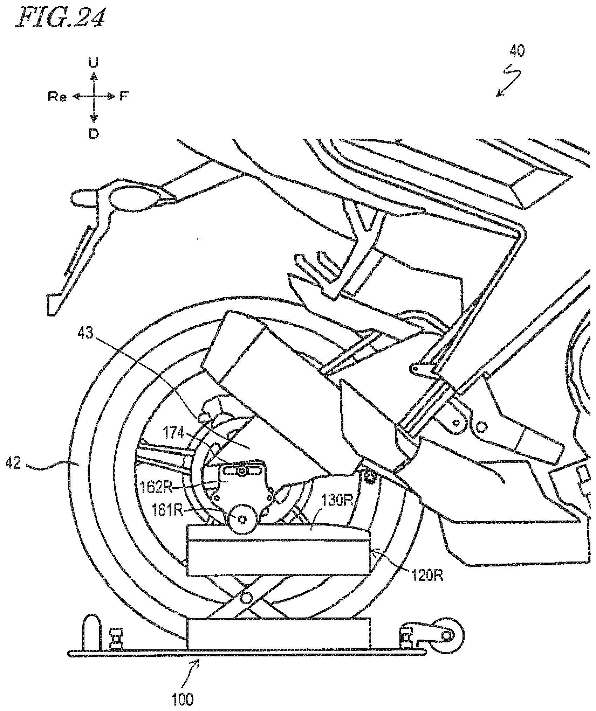

The rail 130L has, in a rear portion thereof, a recess 131L to which the spool 161L is fitted. The rail 130R has, in a rear portion thereof, a recess 131R to which the spool 161R is fitted. The two-wheeled motor vehicle 40 is stopped at a position at which the spools 161L and 161R are fitted to the recesses 131L and 131R, respectively. Displacement of the position of the two-wheeled motor vehicle 40 can be suppressed during the parking by fitting the spools 161L and 161R to the recesses 131L and 131R. FIG. 24 is a view for illustrating the two-wheeled motor vehicle 40 parked under a state in which the spools 161L and 161R are fitted to the recesses 131L and 131R. The start assist device 100 can park the two-wheeled motor vehicle 40 in the upright posture through support of the spools 161L and 161R by the rails 130L and 130R.

The start assist device 100 of the second embodiment includes the jacks 120L and 120R which enable adjustment of heights of the rails 130L and 130R independently of one another. Even when the ground on which the start assist device 100 is installed is inclined, the heights of the rails 130L and 130R can be matched to one another through the independent adjustment of the heights of the rails 130L and 130R. In other words, heights of the spools 161L and 161R resting on the rails 130L and 130R can be matched to one another. As a result, the two-wheeled motor vehicle 40 can be parked in the upright posture.

The rails 130L and 130R may be mounted to the upper stands 122 through intermediation of dampers. Even when entry positions of the spools 161L and 161R are displaced, the rails 130L and 130R can be caused to follow positions of the spools 161L and 161R through extension and retraction of the dampers.

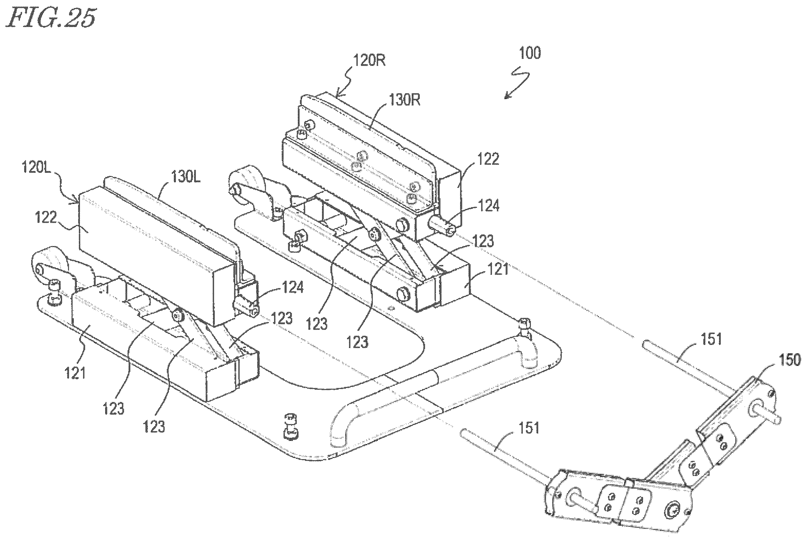

When maintenance of the two-wheeled motor vehicle 40 is carried out, the rear wheel 42 can be lifted from the ground by operating the jacks 120L and 120R to raise the positions of the rails 130L and 130R. On this occasion, for example, when a jig 150 as illustrated in FIG. 25 is used, the jacks 120L and 120R can simultaneously be moved up and down by the same length. The jig 150 has, for example, a ratchet mechanism. A handle is mounted to the jig 150, and two rods 151 of the jig 150 are inserted into the sleeves 124 of the jacks 120L and 120R, respectively. The jacks 120L and 120R can simultaneously be moved up and down by the same length by operating the handle to rotate the sleeves 124.

Moreover, through adjustment of the heights of the rails 130L and 130R, the two-wheeled motor vehicle 40 can be parked under the state in which the rear wheel 42 is in contact with the ground without lifting the rear wheel 42. In this case, when the two-wheeled motor vehicle 40 starts, the two-wheeled motor vehicle 40 can be started while the two-wheeled motor vehicle 40 is maintained in a state of being supported in the upright posture by the start assist device 100.

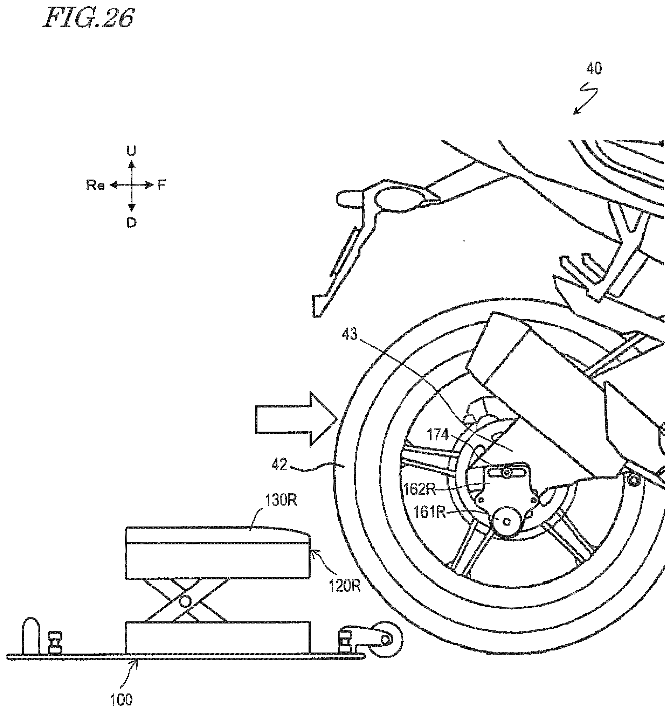

When the rear wheel 42 of the two-wheeled motor vehicle 40 held in contact with the ground rotates upon the start of the two-wheeled motor vehicle 40, the spools 161L and 161R move along the lengthwise directions of the rails 130L and 130R. On this occasion, the friction resistance between the spools 161L and 161R and the rails 130L and 130R can be reduced through rotation of the ball bearings 164 of the spools 161L and 161R. FIG. 26 is a view for illustrating the two-wheeled motor vehicle 40 starting and moving forward from the start assist device 100.

Moreover, as illustrated in FIG. 21, in the start assist device 100 of the second embodiment, a front portion 132 of each of the rails 130L and 130R has a tapered shape. Owing to the tapered shape of each of the rails 130L and 130R, interference between the spools 161L and 161R and the front portions 132 of the rails 130L and 130R can be suppressed when the two-wheeled motor vehicle 40 is parked and started. In the second embodiment, a gently round shape (gentle arc shape) is also included in the meaning of the tapered shape. Moreover, a shape of a combination of a flat shape and a taper is also included in the meaning of the tapered shape.

In the above section, the exemplary embodiments of the present teaching are described.

As described above, the parking device 1 configured to park the straddled vehicle 40 of one embodiment includes the arms 12 and 22, the actuators 50L and 50R, and the control device 60. The arms 12 and 22 are configured to support the straddled vehicle 40. The actuators 50L and 50R are configured to move the positions of the arms 12 and 22. The control device 60 is configured to control the operations of the actuators 50L and 50R. The control device 60 controls the actuators 50L and 50R to bring the arms 12 and 22 close to the straddled vehicle 40 in accordance with the entry of the straddled vehicle 40 into the parking device 1.

The arms 12 and 22 configured to support the straddled vehicle 40 are brought close to the straddled vehicle 40 in accordance with the entry of the straddled vehicle 40 into the parking device 1. The straddled vehicle 40 is supported by the arms 12 and 22, and can maintain the stop state in the upright posture without falling down. Therefore, the straddled vehicle 40 can be parked without use of a mechanism configured to allow the straddled vehicle 40 to stand by itself such as a side stand, a center stand, or an outrigger.

In the certain embodiment, the parking device 1 includes the speed sensor 26, which is to be used for detection of the travel speed of the straddled vehicle 40 entering the parking device 1. The control device 60 is configured to change the timings of starting movements of the arms 12 and 22 in accordance with the detected travel speed of the straddled vehicle 40.

The timings of starting the movements of the arms 12 and 22 are changed in accordance with the travel speed of the straddled vehicle 40. Therefore, the contact between the straddled vehicle 40, which travels in the parking device 1, and the arms 12 and 22 can be suppressed, and the arms 12 and 22 can be brought sufficiently close to the straddled vehicle 40 at the timing at which the straddled vehicle 40 stops.

In the certain embodiment, when the detected speed of the straddled vehicle 40 is low, the control device 60 delays the timings of starting the movements of the arms 12 and 22 compared with the case in which the detected speed is high.

Therefore, the contact between the straddled vehicle 40, which travels in the parking device 1, and the arms 12 and 22 can be suppressed, and the arms 12 and 22 can be brought sufficiently close to the straddled vehicle 40 at the timing at which the straddled vehicle 40 stops.

In the certain embodiment, the parking device 1 includes the speed sensor 26, which is to be used for detection of the travel speed of the straddled vehicle 40 entering the parking device 1. The control device 60 is configured to change the movement speeds of the arms 12 and 22 in accordance with the detected travel speed of the straddled vehicle 40.

The movement speeds of the arms 12 and 22 are changed in accordance with the travel speed of the straddled vehicle 40. Therefore, the contact between the straddled vehicle 40, which travels in the parking device 1, and the arms 12 and 22 can be suppressed, and the arms 12 and 22 can be brought sufficiently close to the straddled vehicle 40 at the timing at which the straddled vehicle 40 stops.

In the certain embodiment, when the detected speed of the straddled vehicle 40 is low, the control device 60 reduces the movement speeds of the arms 12 and 22 compared with the case in which the detected speed is high.

Therefore, the contact between the straddled vehicle 40 traveling in the parking device 1 and the arms 12 and 22 can be suppressed, and the arms 12 and 22 can be brought sufficiently close to the straddled vehicle 40 at the timing at which the straddled vehicle 40 stops.

In the certain embodiment, the parking device 1 includes the contact sensors 18, which are to be used for detection of whether or not the arms 12 and 22 are in contact with the straddled vehicle 40. When the contact of the arms 12 and 22 with the straddled vehicle 40 is detected, the control device 60 stops the movements of the arms 12 and 22.

When the arms 12 and 22 continue to move after the arms 12 and 22 come in contact with the straddled vehicle 40, the posture of the straddled vehicle 40 may be disturbed. When the arms 12 and 22 come in contact with the straddled vehicle 40, the disturbance of the posture of the straddled vehicle 40 can be suppressed by stopping the movements of the arms 12 and 22.

In the certain embodiment, the parking device 1 includes the distance sensors 17, which are to be used for detection of the distance between the arm 12 and the straddled vehicle 40 and the distance between the arm 22 and the straddled vehicle 40. When the distance between the arm 12 and the straddled vehicle 40 and the distance between the arm 22 and the straddled vehicle 40 fall below the predetermined value, the control device 60 reduces the movement speeds of the arms 12 and 22.

Therefore, the contact between the straddled vehicle 40, which travels in the parking device 1, and the arms 12 and 22 can be suppressed.

In the certain embodiment, the actuator 50L is configured to move the arm 12, and the actuator 50R is configured to move the arm 22. The control device 60 is configured to control the actuator 50L to bring the arm 12 close to the straddled vehicle 40 from the left side of the straddled vehicle 40, and control the actuator 50R to bring the arm 22 close to the straddled vehicle 40 from the right side of the straddled vehicle 40.

The arms 12 and 22 are brought close to the straddled vehicle 40 from both the left side and the right side of the straddled vehicle 40 in accordance with the entry of the straddled vehicle 40 into the parking device 1. Regardless of whether the straddled vehicle 40 tilts rightward or leftward after stopping, the straddled vehicle 40 is supported by the arm 12 or 22, and can maintain the stop state in the upright posture without falling down. Therefore, the straddled vehicle 40 can be parked without use of a mechanism configured to allow the straddled vehicle 40 to stand by itself such as a side stand, a center stand, or an outrigger.

In the certain embodiment, the parking device 1 includes the position sensors 15 and 25, which are to be used for detection of the entry position of the straddled vehicle 40 into the parking device 1. The control device 60 is configured to set at least one of the movement speed and the timing of starting movement for each of the respective arms 12 and 22 in accordance with the detected entry position of the straddled vehicle 40.

One of the movement speed and the timing of starting movement for each of the respective arms 12 and 22 is set in accordance with the entry position of the straddled vehicle 40. Therefore, the contact between the straddled vehicle 40, which travels in the parking device 1, and the arms 12 and 22 can be suppressed, and the arms 12 and 22 can be brought sufficiently close to the straddled vehicle 40 at the timing at which the straddled vehicle 40 stops.

In the certain embodiment, when the detected entry position of the straddled vehicle 40 is closer to the left side of the parking device 1 than the right side of the parking device 1, the control device 60 carries out one of setting of the movement speed of the arm 12 to a speed lower than the movement speed of the arm 22 and delaying of the timing of starting the movement of the arm 12 compared with the timing of starting the movement of the arm 22.

Therefore, the contact between the straddled vehicle 40, which travels in the parking device 1, and the arm 12 can be suppressed, and the arms 12 and 22 can be brought sufficiently close to the straddled vehicle 40 at the timing at which the straddled vehicle 40 stops.

In the certain embodiment, the control device 60 is configured to calculate the distance between the arm 12 and the arm 22 based on the operation amounts of the actuator 50L and the actuator 50R. The control device 60 is configured to stop the movements of the arm 12 and the arm 22 when the distance between the arm 12 and the arm 22 falls below the predetermined value.

The control device 60 is configured to stop the movements of the arms 12 and 22 when the distance between the arm 12 and the arm 22 falls below the predetermined value. The contact between the straddled vehicle 40, which travels in the parking device 1, and the arms 12 and 22 can be suppressed by preventing the gap between the arm 12 and the arm 22 from becoming excessively narrow.

The start assist device 100 according to one embodiment includes the rail 130L, the rail 130R, the jack 120L, and the jack 120R. The rail 130L is configured to carry the spool 161L of the straddled vehicle 40. The rail 130R is configured to carry the spool 161R of the straddled vehicle 40. The jack 120L is configured to support the rail 130L. The jack 120R is configured to support the rail 130R. The jack 120L enables adjustment of the height of the rail 130L. The jack 120R enables adjustment of the height of the rail 130R.

The spools 161L and 161R are mounted, for example, to the left side and the right side of the rear wheel 42 of the straddled vehicle 40. The start assist device 100 includes the jacks 120L and 120R which enable adjustment of the heights of the rails 130L and 130R independently of one another. Even when the ground on which the start assist device 100 is installed is inclined, the heights of the rails 130L and 130R can be matched to one another through the independent adjustment of the heights of the rails 130L and 130R. In other words, heights of the spools 161L and 161R resting on the rails 130L and 130R can be matched to one another. Therefore, the straddled vehicle 40 can be parked in the upright posture.

Moreover, through adjustment of the heights of the rails 130L and 130R, the straddled vehicle 40 can be parked under the state in which the rear wheel 42 is in contact with the ground without lifting the rear wheel 42. When the straddled vehicle 40 starts, the straddled vehicle 40 can be started while the straddled vehicle 40 is maintained in a state of being supported in the upright posture by the start assist device 100.

When maintenance of the straddled vehicle 40 is carried out, the rear wheel 42 of the straddled vehicle 40 can be lifted from the ground by raising the positions of the rails 130L and 130R.

In the certain embodiment, the lengthwise direction of the rail 130L and the lengthwise direction of the rail 130R are parallel to one another. The straddled vehicle 40 is movable along the lengthwise directions of the rails 130L and 130R.

When the rear wheel 42 of the straddled vehicle 40 held in contact with the ground rotates upon the start of the straddled vehicle 40, the spools 161 L and 161R move along the lengthwise directions of the rails 130L and 130R. Therefore, the straddled vehicle 40 can be started while the straddled vehicle 40 is maintained in a state of being supported by the start assist device 100 in the upright posture.

In the certain embodiment, the rail 130L has the recess 131L to which the spool 161L is fitted. The rail 130R has the recess 131R to which the spool 161R is fitted.

The displacement of the position of the straddled vehicle 40 is suppressed during the parking with the configuration in which the rails 130L and 130R have the recesses 131L and 131R to which the spools 161L and 161R are fitted respectively.

In the certain embodiment, at least a part of the rail 130L has the tapered shape, and at least a part of the rail 130R has the tapered shape.

Owing to the tapered shape of each of the rails 130L and 130R, interference between the spools 161L and 161R and the rails 130L and 130R can be suppressed when the straddled vehicle 40 is parked and started.

## Claims

1. A start assist device, comprising:
a first rail (130L) configured to carry a first spool (161L) of a straddled vehicle (40);
a second rail (130R) configured to carry a second spool (161R) of the straddled vehicle (40);
a first jack (120L) configured to support the first rail (130L); and
a second jack (120R) configured to support the second rail (130R),
wherein the first jack (120L) is configured to enable adjustment of a height of the first rail (130L), and the second jack (120R) is configured to enable adjustment of a height of the second rail (130R).

2. The start assist device according to claim 1, wherein the first jack (120L) and the second jack (120R) are configured to enable adjustment of the heights of the first rail (130L) and the second rail (130R) independently of one another.

3. The start assist device according to claim 1 or 2, wherein a lengthwise direction of the first rail (130L) and a lengthwise direction of the second rail (130R) are parallel to one another, and
wherein the straddled vehicle (40) is movable along the lengthwise directions of the first rail (130L) and the second rail (130R).

4. The start assist device according to any one of claims 1 to 3, wherein the first rail (130L) has a recess to which the first spool (161L) is fitted, and
wherein the second rail (130R) has a recess to which the second spool (161R) is fitted.

5. The start assist device according to any one of claims 1 to 4, wherein at least a part of the first rail (130L) has a tapered shape, and
wherein at least a part of the second rail (130R) has a tapered shape.

6. The start assist device according to any one of claims 1 to 5, wherein the first jack (120L) and the second jack (120R) are configured to be simultaneously moved up and down.

7. The start assist device according to claim 6, wherein the first jack (120L) and the second jack (120R) are configured to be simultaneously moved up and down by the same length.

8. The start assist device according to claim 6 or 7, further comprising a jig (150) configured to operate the first jack (120L) and the second jack (120R) to move the first jack (120L) and the second jack (120R) simultaneously up and down.

9. The start assist device according to claim 8, wherein a handle is mounted to the jig (150), and two rods (151) of the jig (150) are insertable into sleeves (124) of the first jack (120L) and the second jack (120R), respectively, wherein the first jack (120L) and the second jack (120R) are simultaneously be moveable up and down by the same length by operating the handle to rotate the sleeves (124), when the two rods (151) of the jig (150) are inserted into sleeves (124).
